# EUROPEAN PATENT APPLICATION

(11) **EP 2 311 537 A1**
(43) Date of publication of application: **20.04.2011**
(21) Application number: 09172022.7
(22) Date of filing: 02.10.2009
(51) Int. Cl.: A63F 13/02

(54) **Method and means for a throwable gaming control**

(71) Applicant: Ball-IT Oy, 90100 Oulu (FI)
(72) Inventor: Vaananen, Johannes, 90140, Oulu (FI)
(74) Representative: Väänänen, Mikko Kalervo

(57) **Abstract**

The invention relates to a throwable gaming control (710) used in motion controlled games. In particular, the invention relates to improving the sensory performance of a throwable gaming control, when the gaming control is actually airborne during a motion controlled game. A throwable gaming control for controlling at least one event in a computer game, comprising at least one magnetic sensor (110) and at least one acceleration sensor (120) is in accordance with the invention and is **characterised in that**: at least one acceleration sensor (120) is arranged to the center of gravity of the game control and/or to the proximity of the center of gravity of the gaming control and at least one magnetic sensor (110) is arranged to a position of least internal magnetic noise, and/or a position of low internal magnetic noise. The best mode of the invention is considered to be the combination of an acceleration sensor (120) in the centre of gravity of a wireless spherical mouse that in addition houses a magnetic sensor (110) in a magnetic noise free position. This spherical mouse can be used to play for example basketball with real basketball like movements in a computer game (70).

## Description

### TECHNICAL FIELD OF INVENTION

The invention relates to a throwable gaming control used in motion controlled games. In particular, the invention relates to improving the sensory performance of a throwable gaming control, when the gaming control is actually airborne during a motion controlled game.

### BACKGROUND

The arrival of motion controlled gaming controls has revolutionised the computer gaming industry. The most notable example of this trend to the general public has been the success of the Nintendo Wii™, with which people can play for example a computer game of tennis as if they were playing the real game, i.e. by controlling the game with tennis like movements. In this game the gaming control is the tennis bat.

On the other hand it has been shown in the prior art that the gaming control can also perform the function of the ball in the game, for example EP 2008697A1 shows a publication where the user pretends to throw a baseball by pretending to throw a gaming control in a motion controlled game. This document is cited here as reference.

US 2006/0287085 is also a useful exhibit into throwable gaming controls. For example in paragraph 61 of the said publication a gaming control that corresponds to a football in a game is used. The event of throwing the gaming control and its release is recognised by acceleration sensors, i.e. a particular change in the acceleration of the controller may signal the release of the American football. This document is also cited here as reference.

However, the prior art is burdened by some significant disadvantages. An important disadvantage is that the actual throw, or a gesture to throw, is strenuous to the gaming control and its sensors. This leads to poor operation of the gaming control in these situations and also reduces the durability of the gaming control.

### SUMMARY

The invention under study is directed towards a system and a method for effectively realising a gaming control that works robustly when thrown or gestured to be thrown by a player of the computer game. A further object of the invention is to present a system and a method for increasing the durability of the gaming control.

In one aspect of the invention the sensors that are necessary to measure the motion of the throwable gaming control are realised on a circuit board. The circuit board with the sensors is intended to be placed into a padding to shield it from impacts and hits. With due consideration for the mass distribution of both the padding and the circuit board, and the system as a whole, the acceleration sensors are placed at the center of gravity of the system on the circuit board, or very close to it. This is a desirable position for a acceleration sensor, because when the throwable gaming control is actually being thrown and rotates in mid-air, in this position the accelerometer experiences the least amount of centripetal and/or centrifugal forces. It is preferable to minimise the centripetal and/or centrifugal forces that the accelerometer experiences merely because the throwable gaming control is rotating around itself. These forces confuse the determination of the state of motion of the throwable gaming control. In particular it is difficult to determine whether the throwable gaming control is actually airborne, moving where? and at what speed?, if centripetal/fugal accelerations confuse readings. From the point of view of the accelerometer, it is impossible to distinguish whether the acceleration is transverse, gravity originated or centrifugal and/or centripetal, so it is preferable to place the accelerometer to the position where the centrifugal and/or centripetal forces are the smallest, and through which the gravity vector acts without a couple.

In another or the same aspect of the invention the magnetic sensor is placed on the limb of a circuit board. This is because there it is furthest from the other electrical wires of the gaming control and therefore is subjected to the least amount of internal magnetic noise. This is preferable because the reduced magnetic noise improves the determination of the Earth's magnetic field by the magnetic sensor. The accuracy of the measurement of the Earth's magnetic field is important in the determination of the orientation of the throwable gaming control. Therefore minimising non-Earth originated magnetic field in the proximity of the magnetic sensor allows the sensor to deliver more accurate readings.

According to further aspects of the invention, the improved state of motion data that can be derived from the inventive throwable gaming control enables several computing methods that can be used to enhance motion controlled computer games. In one aspect of the invention, the state of motion of the throwable gaming control is deduced, and the acceleration, rotational energy and rotational speed of the throwable gaming control are used to distinguish whether the gaming control is actually thrown to mid-air, i.e. the gaming control is airborne, or whether it is not airborne. In another aspect of the invention when the throwable gaming control is deduced to be airborne, the inventive sensory data is used to distinguish whether the throwable gaming control was indeed thrown by the player, or merely dropped. In a further different aspect of the invention the inventive sensory system and data derived thereby is used to measure the distance travelled by the throwable gaming control in its airborne state.

According to even further aspects of the invention, the inventive gaming control, among other throwable gaming controls, can be implemented so that it is used ingeniously to simulate the game of basketball. In this aspect of the invention the throwable gaming control is thrown but catched higher than the point from which it was thrown. This allows the player to compensate throws in a basketball game by catching them early, to make them shorter, for example.

Furthermore, according to another aspect of the invention the direction of motion of the throw that the throwable gaming control experienced is deduced by deducing the direction of the acceleration vector of the gaming control prior to the airborne state, i.e. release, and also computing the acceleration counterforce vector when the throwable gaming control stops; for example by it dropping on the ground, hitting a wall or by someone catching it.

Some or all of the aforementioned advantages of the invention are accrued with a throwable gaming control that has the accelerometer at the center of gravity and the magnetometer at a low magnetic noise position and uses the improved sensory data to recognise the motion inputs provided by the players with the aforementioned computing methods.

A throwable gaming control for controlling at least one event in a computer game, comprising at least one magnetic sensor and at least one acceleration sensor is in accordance with the invention and **characterised in that**,
- at least one acceleration sensor is arranged to the center of gravity of the game control and/or to the proximity of the center of gravity of the gaming control.

A throwable gaming control for controlling at least one event in a computer game, comprising at least one magnetic sensor and at least one acceleration sensor is in accordance with the invention and **characterised in that**,
- at least one magnetic sensor is arranged to a position of least internal magnetic noise, and/or a position of low internal magnetic noise.

A method for determining the state of motion of a throwable gaming control, comprising at least one acceleration sensor and at least one magnetic sensor is in accordance with the invention and characterised by the following steps:
- observing the acceleration of the gaming control,
- identifying the state of motion of the gaming control as airborne when the acceleration of the gaming control deviates from gravity g for a period of time exceeding the threshold time (T1),
- if the gaming control is identified as not airborne; further identifying the state of motion of the gaming control as airborne when the rotational energy and rotational speed of the gaming control are stable for a period of time exceeding a second threshold time (T2).

A method for distinguishing a drop and a throw in a motion controlled computer game with a throwable gaming control and comprises at least one magnetic sensor and at least one acceleration sensor is in accordance with the invention and **characterised in that**,
- the acceleration data prior to the identification of the airborne state of motion is observed,
- integrating the acceleration of the gaming control as function of time for a threshold period (T3) to derive first integral,
- integrating the gravity as a function of time for the threshold period (T3) to derive second integral,
- subtracting said second integral from the said first integral to derive the remainder of the integrals,
- a positive remainder of the integrals is interpreted as a throw of the gaming control in the said computer game, a negative remainder of the integral is interpreted as a drop in the said computer game.

A method for determining the distance travelled of a throwable gaming control that comprises at least one acceleration sensor and at least one magnetic sensor, is in accordance with the invention and characterised by the following steps:
- observing the time spent by the thrown gaming control in the airborne state and/or the acceleration prior to the airborne state,
- comparing the time spent in the airborne state with the approximate air resistance of the throwable gaming control,
- deducing the distance travelled in the airborne state based on the air resistance and the time spent in the airborne state.

A method for determining the direction of motion of a throwable gaming control that comprises at least one acceleration sensor and at least one magnetic sensor, is in accordance with the invention and characterised by the following steps:
- observing the direction of the acceleration vector of the gaming control prior to the airborne state,
- observing the counterforce of the acceleration vector after the end of the airborne state,
- using said acceleration vector and acceleration counter force vector to deduce the direction of the throw that the said throwable gaming control experienced.

Method of manufacture of a throwable gaming control, comprising at least one acceleration sensor and at least one magnetic sensor, is in accordance with the invention and **characterised in that**,
- at least one magnetic sensor is placed in a low magnetic noise position on at least one circuit board,
- at least one acceleration sensor is placed at or close to the centre of gravity of the throwable gaming control on the circuit board,
- the at least one circuit board and the said sensors are padded into a padding.

In addition and with reference to the aforementioned advantage accruing embodiments, the best mode of the invention is considered to be the combination of an acceleration sensor in the centre of gravity of a wireless spherical mouse that in addition houses a magnetic sensor in a magnetic noise free position. This spherical mouse can be used to play for example a computer game of basketball with real basketball -like movements.

### BRIEF DESCRIPTION OF THE DRAWINGS

In the following the invention will be described in greater detail with reference to exemplary embodiments in accordance with the accompanying drawings, in which
Figure 1 demonstrates an embodiment of the inventive gaming control 10 as a block diagram.
Figure 2 demonstrates an embodiment 20 of the manufacturing method of the inventive throwable gaming control in accordance with the invention.
Figure 3 demonstrates an embodiment 30 of the inventive method used to recognise whether the throwable gaming control is airborne.
Figure 4 demonstrates an embodiment 40 of the inventive method used to recognise whether the throwable gaming control is being thrown or being dropped.
Figure 5 demonstrates an embodiment 50 of the inventive method used to measure the distance travelled by the throwable gaming control when it is being thrown or being dropped.
Figure 6 demonstrates an embodiment 60 of the inventive method used to measure the direction travelled by the throwable gaming control when it is being thrown or being dropped.
Figure 7 shows an embodiment 70 of a use scenario of the inventive gaming control in which the gaming control is used to play a motion controlled basketball in a computer game.

Some of the embodiments are described in the dependent claims.

### DETAILED DESCRIPTION OF EMBODIMENTS

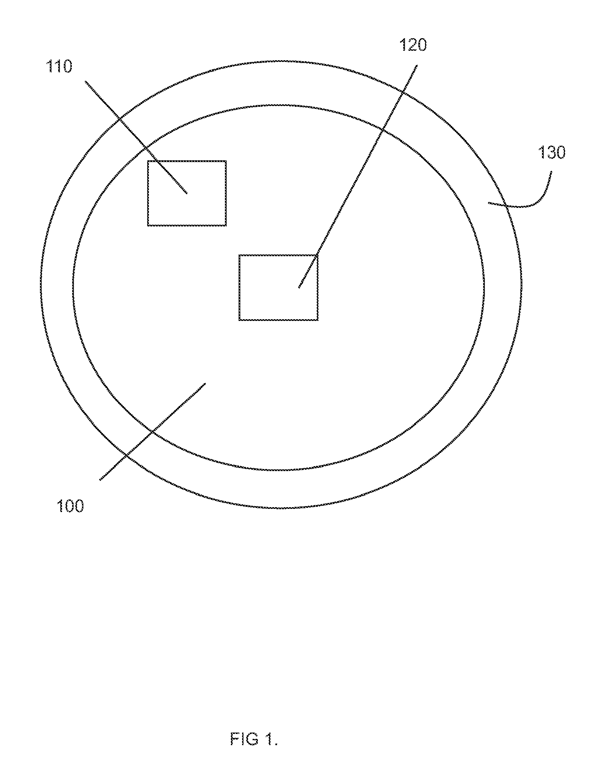

Figure 1 shows an exemplary embodiment 10 of the inventive throwable gaming control. The gaming control is preferably used to control motion controlled computer and/or video games. The sensors that sense the motion of the gaming control are typically realised on at least one circuit board 100 in many embodiments. At least one circuit board and the sensors 110, 120 are typically housed in at least one padding 130. In some embodiments of the invention the throwable gaming control is the shape of a ball, and can be a wireless spherical mouse as described in the publication WO2007/077124 of the applicant, which is cited here as reference.

The throwable gaming control 10 houses several sensors, such as at least one acceleration sensor, at least one magnetic sensor and at least one gyroscope. In some preferable embodiments of the invention the acceleration sensor 120 is placed in the centre of mass and/or gravity of the throwable gaming control. In some embodiments this is at the centre of the circuit board 100 and/or padding 130. If the throwable gaming control is a spherical mouse, the circuit board is preferably the shape of a coin, i.e. circular or elliptic, and the padding 130 is arranged into a spherical and/or spherically elliptic shape to enclose the circuit board 100 and the sensors 110, 120 on it inside the padding 130. The magnetic sensor 110 is preferably placed into a position of low internal magnetic noise on the circuit board 100. In some embodiments of the invention this is at the limb of the circuit board 100, where there are less electric wires and connections that generate electromagnetic fields, i.e. → magnetic noise. In some embodiments of the invention the magnetic sensor can be electrically insulated from the circuit board, except for its own power and data connections to the circuit board.

It should be noted that the position of the magnetic sensor can be optimised separately with no regard given to the position of the acceleration sensor in some embodiments of the invention. It should also be noted that the position of the acceleration sensor can be optimised separately with no regard given to the position of the magnetic sensor in some embodiments of the invention. It should also further be noted that the embodiment 10 can be readily permuted and/or combined with any of the embodiments 20, 30, 40, 50, 60 and/or 70.

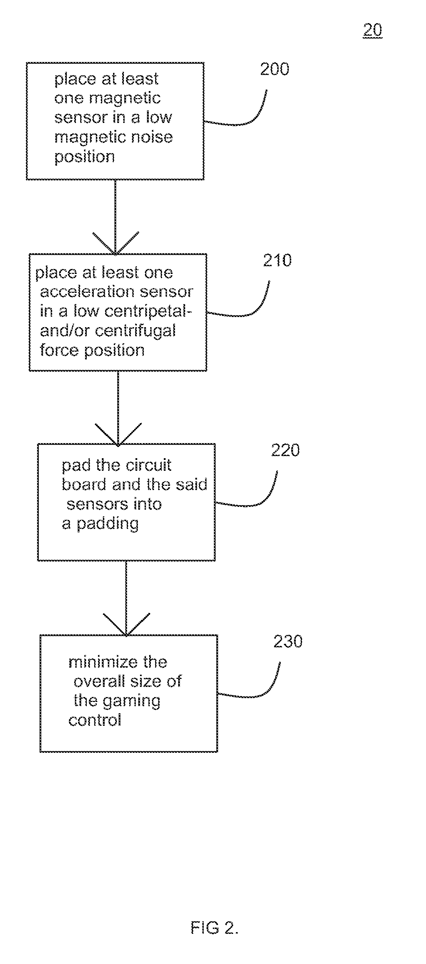

Figure 2 shows an exemplary method of producing the throwable gaming control of the invention as a flow diagram. In phase 200 at least one magnetic sensor is placed in a low magnetic noise position on at least one circuit board. If no circuit board is used, the magnetic sensor may be floated or suspended by wires or supports in another low magnetic noise position. In phase 210 at least one acceleration sensor is placed at or close to the centre of gravity of the throwable gaming control on the circuit board. This is because in this position the centrifugal and/or centripetal accelerations are the smallest, which may confuse translational state of motion determinations. In phase 220 the at least one circuit board and the said sensors are padded into a padding. The padding can be made from rubber or plastic or any other material and it can be of any shape. In some embodiments the padding is spherical, thus making the gaming control into the shape of a sphere. In phase 230 the overall size of the gaming control is minimized. In many consumer applications it is preferable that the gaming control is small and fits into a pocket, but in some other embodiments it can be made into a different size, for example to the shape and size of a football or a basketball. The aforementioned gaming control is preferable when the computer game relates to football or basketball in accordance with the invention.

It should also further be noted that the embodiment 20 can be readily permuted and/or combined with any of the embodiments 10, 30, 40, 50, 60 and/or 70 and be used to create any of the embodiments 10, 30, 40, 50, 60 and/or 70.

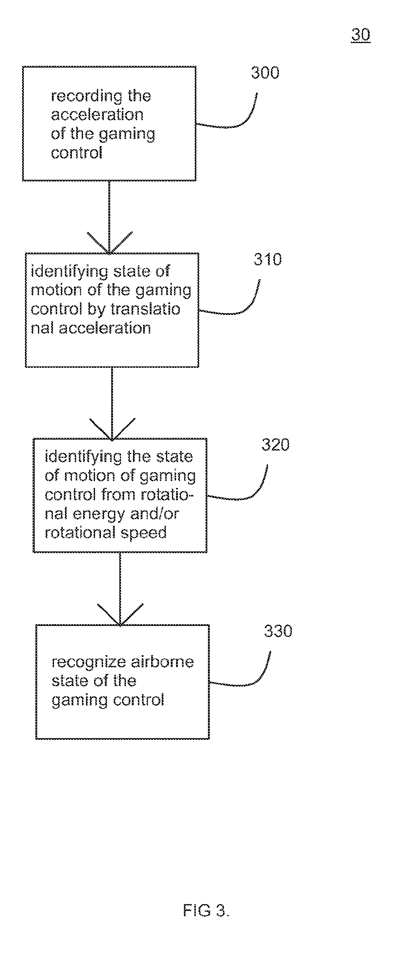

Figure 3 shows a method for determining the state of motion of a throwable gaming control in accordance with the invention. In phase 300 the acceleration of the gaming control is observed, typically by an acceleration sensor, magnetic sensors and/or gyroscopes. In phase 310 the state of motion of the gaming control is identified as airborne when the acceleration of the gaming control deviates from gravity g for a period of time exceeding the threshold time (T1). In some embodiments this threshold time is about 100 ms, but it may be different depending on the computer game or the player in accordance with the invention.

Typically and in accordance with the invention if the gaming control is identified as not airborne with the above test, there is still a possibility that it might in fact be airborne. The rotational forces might have confused the acceleration sensors. In phase 320 the state of motion of the gaming control is identified as airborne when the rotational energy and rotational speed of the gaming control are stable for a period of time exceeding a second threshold time (T2). T2 is also typically about 100 ms in some embodiments of the invention. Based on either one of the aforementioned tests, or both of them, the gaming control is recognised to be airborne in phase 320.

It is in accordance with the invention that after identifying the said airborne state the catching of the throwable gaming control by the same player or another player is identified by first recording the acceleration of the gaming control. Then identifying the state of motion of the gaming control is identified as catched when the acceleration of the gaming control is similar to gravity g for a period of time exceeding the third threshold time (T3). In many embodiments this is sufficient to determine that the thrown gaming control has been catched. Typically T3 is about 100 ms, but it can be of any value in accordance with the invention.

Now, if the gaming control is identified as not airborne it is in accordance with the invention to perform further tests to certify this fact. In one of these tests, the state of motion of the gaming control is further identified as catched when the rotational energy and rotational speed of the gaming control are not stable for a period of time exceeding a fourth threshold time (T4). Typically T4 is also about 100 ms, but it can be of any value in accordance with the invention. Thus, based on either one of the aforementioned tests, or both of them, the gaming control is recognised to have been catched from the airborne state.

It should also further be noted that the embodiment 30 can be readily permuted and/or combined with any of the embodiments 10, 20, 40, 50, 60 and/or 70.

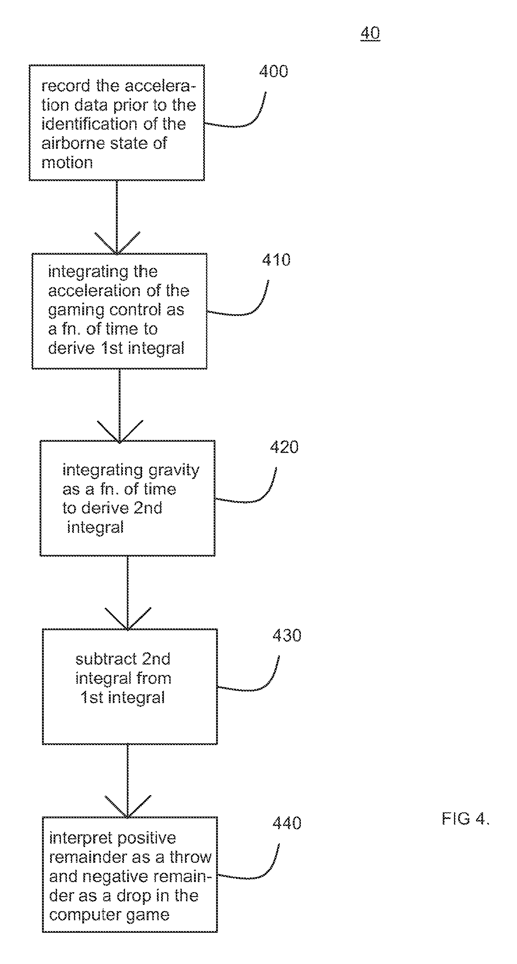

Figure 4 shows an embodiment of a method for distinguishing a drop and a throw in a motion controlled computer game with a throwable gaming control, that is airborne at the time of making the distinction in some embodiments, and comprises at least one magnetic sensor and at least one acceleration sensor.

In phase 400 the acceleration data prior to the identification of the airborne state of motion is measured, typically with an acceleration sensor, but also gyroscopes and/or magnetic sensors might be used in one way or the other to make the measurement. In phase 410 the acceleration of the gaming control is integrated as function of time for a threshold period (T5) to derive the first integral. In most embodiments the integration is performed by a microprocessor, or a similar computerised task processing apparatus. In some embodiments the microprocessor may reside in either the gaming control, or a remote computer, for example a computer that runs the computer game program in which the gaming control is used to control the game.

In phase 420 the gravity is integrated as a function of time for the threshold period (T5) to derive a second integral. The threshold period T5 may be of any length, but it is typically 100 ms. In phase 430 said second integral is subtracted from the said first integral to derive the remainder of the integrals. In phase 440 a positive remainder of the integrals is typically interpreted as a throw of the gaming control in the said computer game and a negative remainder of the integral is interpreted as a drop in the said computer game in some embodiments of the invention.

It should also further be noted that the embodiment 40 can be readily permuted and/or combined with any of the embodiments 10, 20, 30, 50, 60 and/or 70.

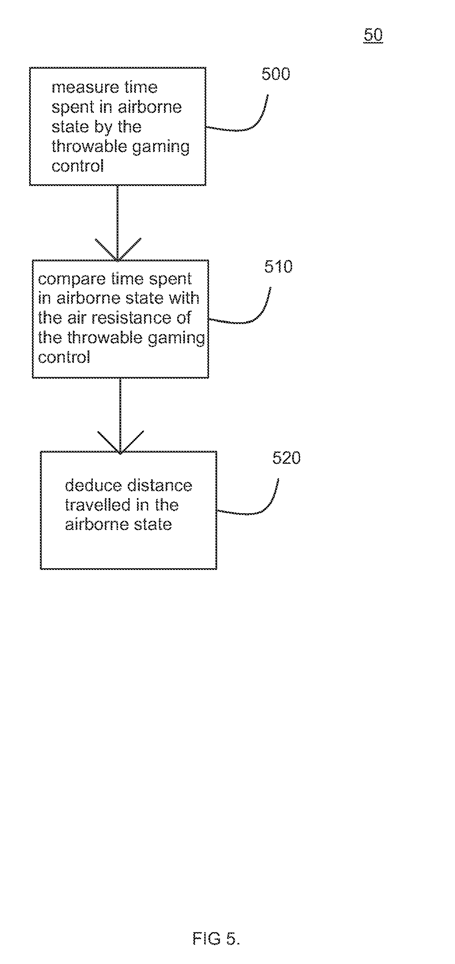

Figure 5 shows an embodiment of a method for determining the distance travelled of a throwable gaming control. Typically the gaming control comprises at least one acceleration sensor and at least one magnetic sensor, and possibly also at least one gyroscope. In phase 500 the time spent by the thrown gaming control in the airborne state and/or the acceleration prior to the airborne state is measured. Preferably both parameters are measured, but the measurement of only either one is also possible and in accordance with the invention. In phase 510 the time spent in the airborne state and/or the said acceleration are compared with the approximate air resistance of the throwable gaming control. The air resistance can be measured by a separate gauge in the gaming control or a remote computer, or a numerical value of the air resistance might be stored into the memory of the gaming control or computer or both in some embodiments of the invention. In phase 520 the distance travelled in the airborne state is deduced based on the air resistance and the time spent in the airborne state and/or acceleration prior to the airborne state. In some embodiments the vertical and the horizontal distance components traversed in the airborne state are calculated separately. In some embodiments at least one magnetic sensor is used to distinguish these distance components.

It should also further be noted that the embodiment 50 can be readily permuted and/or combined with any of the embodiments 10, 20, 30, 40, 60 and/or 70.

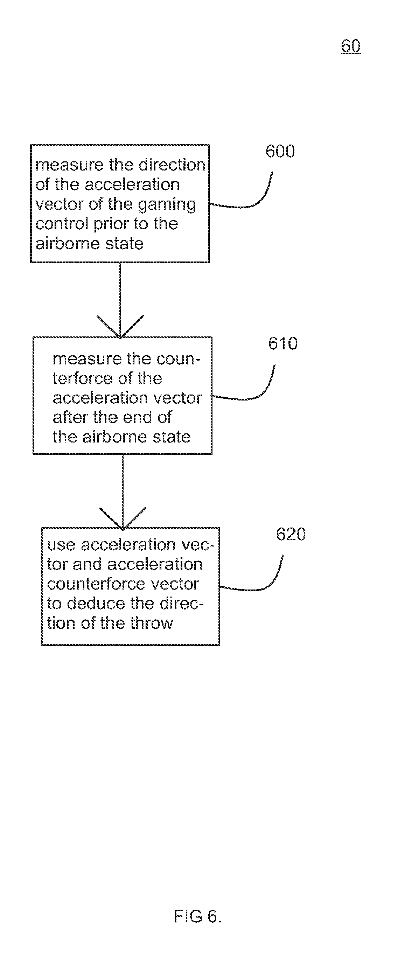

Figure 6 shows a method for determining the direction of motion of a throwable gaming control that typically comprises at least one acceleration sensor and at least one magnetic sensor. The determination is typically done during a throw, but can also be done after it or based on a throw gesture in some embodiments. In phase 600 the direction of the acceleration vector of the gaming control prior to the airborne state is measured and observed. The direction of the acceleration vector is typically determined by the magnetic sensor determining a reference direction with respect to the Earth's magnetic field and an acceleration sensor and/or gyroscope determining the rest of the directional information in some embodiments. In phase 610 the counterforce of the acceleration vector is observed after the end of the airborne state. The direction of this vector is likewise determined by the magnetic sensor determining a reference direction with respect to the Earth's magnetic field and an acceleration sensor and/or gyroscope determining the rest of the directional information in some embodiments.

In phase 620 the said acceleration vector and/or acceleration counterforce vector are used to deduce the direction of the throw that the said throwable gaming control experienced. Either one of the vectors can be used individually or they can be used in combination to determine the direction of the throw.

It should also further be noted that the embodiment 60 can be readily permuted and/or combined with any of the embodiments 10, 20, 30, 40, 50 and/or 70.

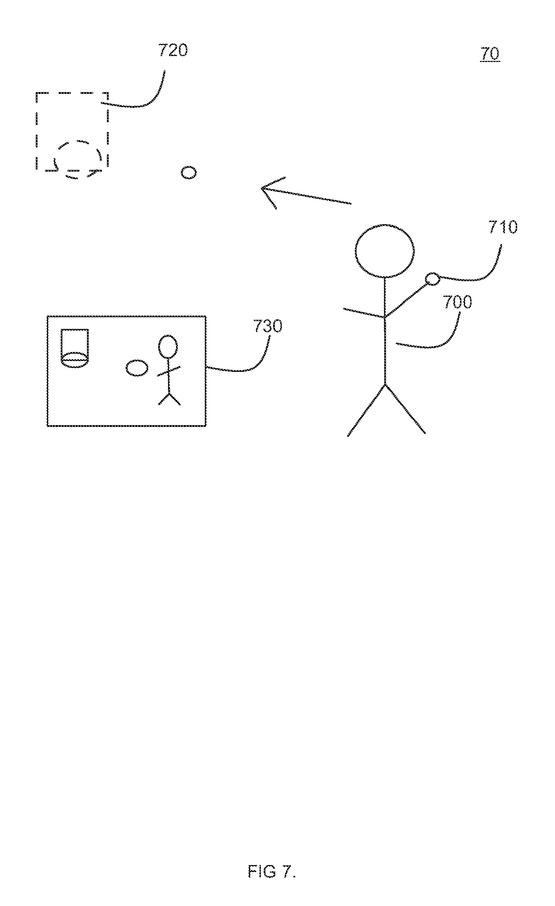

Figure 7 shows an exemplary use scenario of the invention, a gaming embodiment 70 involving motion controlled basketball computer game. In one of the embodiments the player 700 holds the throwable gaming control 710 in his hand and imagines the basketball hoop 720. He subsequently throws the gaming control towards the imaginary hoop 720. The motion of the gaming control 710 gets converted into the motion of the ball in the computer game shown on the screen 730. In a preferred embodiment of the invention, only the height of the throw defines a controlling variable for the game. In this embodiment the horizontal component of the throw is preset in the game and independent of the horizontal motion component experienced by the throwable gaming control during throw. The height of the throw experienced by the gaming control is thus the variable that controls the events in the game. This is preferable because in many situations it would be disadvantageous to be throwing the gaming control around the room, or all over the place. When the height of the throw is the relevant control parameter, the player can easily control events in the game by throwing the game control just vertically up, a throw that is easy for the player to catch also. In some embodiments the throw imitates the pitch of Finnish Baseball=pesäpallo, where the pitch is thrown vertically by the pitcher for the batsman.

In some embodiments the throwable gaming control 710 is catched in a higher position than where it was originally released by the player 700 or another player. When the gaming control is catched prematurely, the flight distance measured from the actual time in the airborne state is shorter than the earlier anticipated flight distance. In some embodiments of the invention, in the computer game controlled by the gaming control 710, a throw catched higher just said is interpreted as compensation to the earlier throw. For example the compensation could be used to make the throw shorter or lower or both. Also, it is possible that the gaming control is catched lower, i.e. maturely, and consequently in the game the throw is compensated to be higher or longer or both. It is clearly in accordance with the invention that the correspondence between different throw events and events in the game controlled by the gaming control being thrown can be set arbitrarily, for example at will of the programmer and/or designer making use of the invention in his game.

It should also further be noted that the embodiment 70 can be readily permuted and/or combined with any of the embodiments 10, 20, 30, 40, 50 and/or 60.

The invention has been explained above with reference to the aforementioned embodiments and several commercial and industrial advantages have been demonstrated. The methods and arrangements of the invention allow more reliable motion controlled computer gaming.

The invention has been explained above with reference to the aforementioned embodiments. However, it is clear that the invention is not only restricted to these embodiments, but comprises all possible embodiments within the spirit and scope of the inventive thought and the following patent claims.

### REFERENCES

EP 2008697A1, Wei et al., "Self contained inertial navigation system for interactive control using movable controllers"
US 2006/0287085, Mao et al., "Inertially trackable hand-held controller"
WO 2007/077124, Väänänen et al. "User operable pointing device such as a mouse"

## Claims

1. A throwable gaming control for controlling at least one event in a computer game, comprising at least one magnetic sensor (110) and at least one acceleration sensor (120) **characterised in that**,
- at least one acceleration sensor (120) is arranged to the center of gravity of the game control and/or to the proximity of the center of gravity of the gaming control.

2. A throwable gaming control for controlling at least one event in a computer game, comprising at least one magnetic sensor (110) and at least one acceleration sensor (120) **characterised in that**,
- at least one magnetic sensor (110) is arranged to a position of least internal magnetic noise, and/or a position of low internal magnetic noise.

3. A method for determining the state of motion of a throwable gaming control, comprising at least one acceleration sensor (120) and at least one magnetic sensor (110), **characterised by the following steps:**
- observing the acceleration of the gaming control (300),
- identifying the state of motion of the gaming control as airborne when the acceleration of the gaming control deviates from gravity g for a period of time exceeding the threshold time (T1) (310),
- if the gaming control is identified as not airborne; further identifying the state of motion of the gaming control as airborne when the rotational energy and rotational speed of the gaming control are stable for a period of time exceeding a second threshold time (T2) (320).

4. A method as claimed in claim 3, **characterised in that**, after identifying the said airborne state the catching of the throwable gaming control is identified by:
- observing the acceleration of the gaming control,
- identifying the state of motion of the gaming control as catched when the acceleration of the gaming control is similar to gravity g for a period of time exceeding the third threshold time (T3),
- if the gaming control is identified as not airborne; further identifying the state of motion of the gaming control as catched when the rotational energy and rotational speed of the gaming control are not stable for a period of time exceeding a fourth threshold time (T4).

5. A method for distinguishing a drop and a throw in a motion controlled computer game with a throwable gaming control and comprises at least one magnetic sensor and at least one acceleration sensor, **characterised in that**,
- the acceleration data prior to the identification of the airborne state of motion is observed (400),
- integrating the acceleration of the gaming control as function of time for a threshold period (T3) to derive first integral (410),
- integrating the gravity as a function of time for the threshold period (T3) to derive second integral (420),
- subtracting said second integral from the said first integral to derive the remainder of the integrals (430),
- a positive remainder of the integrals is interpreted as a throw of the gaming control in the said computer game, a negative remainder of the integral is interpreted as a drop in the said computer game (440).

6. A method for determining the distance travelled of a throwable gaming control that comprises at least one acceleration sensor and at least one magnetic sensor, **characterised by the following steps:**
- observing the time spent by the thrown gaming control in the airborne state and/or the acceleration prior to the airborne state (500),
- comparing the time spent in the airborne state with the approximate air resistance of the throwable gaming control (510),
- deducing the distance travelled in the airborne state based on the air resistance and the time spent in the airborne state (520).

7. A method as claimed in claim 6, **characterised in that**, the vertical and the horizontal distance components traversed in the airborne state are calculated separately.

8. A method as claimed in claim 7, **characterised in that**,
- the throwable gaming control (710) is catched in a higher position that where it was originally released,
- the flight distance measured from the actual time in the airborne state is shorter than the earlier anticipated flight distance,
- in the computer game controlled by the gaming control, a higher catched throw just said is interpreted as compensation to the earlier throw.

9. A method for determining the direction of motion of a throwable gaming control that comprises at least one acceleration sensor (120) and at least one magnetic sensor (110) **characterised by the following steps:**
- observing the direction of the acceleration vector of the gaming control prior to the airborne state (600),
- observing the counterforce of the acceleration vector after the end of the airborne state (610),
- using said acceleration vector and acceleration counter force vector to deduce the direction of the throw that the said throwable gaming control experienced (620).

10. Method of manufacture of a throwable gaming control, comprising at least one acceleration sensor (120) and at least one magnetic sensor (110), **characterised in that**,
- at least one magnetic sensor is placed in a low magnetic noise position on at least one circuit board (200),
- at least one acceleration sensor is placed at or close to the centre of gravity of the throwable gaming control on the circuit board (210),
- the at least one circuit board and the said sensors are padded into a padding (220).
